# EUROPÄISCHE PATENTANMELDUNG

(11) **EP 4 559 689 A1**
(43) Veröffentlichungstag der Anmeldung: **28.05.2025**
(21) Anmeldenummer: 23212042.8
(22) Anmeldetag: 24.11.2023
(51) Int. Cl.: B41J 11/00, B41M 7/00, B41F 23/08

(54) **SYSTEM ZUM TINTENSTRAHLDRUCK MIT EINEM LACKAPPLIKATOR UND EINER GLANZSENSORIK**

(71) Anmelder: CANON KABUSHIKI KAISHA, Tokyo 146-8501 (JP)
(72) Erfinder: Slawny, Natalja, Munich / 81669 (DE); Ebert, Artur, Olching / 82140 (DE); Schimscha, Volker, Haar / 85540 (DE)
(74) Vertreter: Canon Production Printing IP Department

(57) **Zusammenfassung**

Die Erfindung betrifft ein System (1) zum Tintenstrahldruck mit einer Druckeinrichtung (100), einer Fixiereinrichtung (200), einem Lackapplikator (300), einer Glanzsensorik (400) und einer Reaktionseinheit, wobei die Druckeinrichtung (100) dazu eingerichtet ist, Primer und Tinte auf ein Substrat (S) zu drucken, wobei die Fixiereinrichtung (200) dazu eingerichtet ist, den aufgedruckten Primer und die aufgedruckte Tinte am Substrat (S) zu fixieren, wobei der Lackapplikator (300) dazu eingerichtet ist, einen ILack auf das bedruckte und fixierte Substrat aufzutragen, wobei die Lsensorik (400) dazu eingerichtet ist, mit einer bestimmten Breitenauflösung und einer bestimmten Längenauflösung Glanzwerte des Substrats nach der Lackauftragung zu erfassen, wobei die Reaktionseinheit dazu eingerichtet ist, bei Eintritt einer von den Glanzwerten abhängigen Bedingung eine Maßnahme einzuleiten.

## Beschreibung

Die Erfindung betrifft ein System zum Tintenstrahldruck mit einer Druckeinrichtung, einer Fixiereinrichtung und einem Lackapplikator.

Es ist bekannt, ein System zum Tintenstrahldruck vorzusehen, das eine Druckeinrichtung, eine Fixiereinrichtung und einen Lackapplikator aufweist.

Typische Druckeinrichtungen für Tintenstrahldruck sehen Druckköpfe vor, die mit Tintenausstoßdüsen versehen sind. Diese sind in der Regel oberhalb eines Substratlaufes angeordnet und dazu eingerichtet, Tinte auf ein Substrat auszustoßen. Für eine bessere Koagulation oder Verfestigung der Tinte können weiterhin Druckköpfe für die Auftragung eines Primers vorgesehen sein, die in Druckrichtung den Druckköpfen zum Tintenstrahldruck vorgelagert sind. Der Primer kann die Koagulation durch eine Vorbehandlung der Oberfläche verbessern, so dass zu einer Verfestigung an Ort und Stelle beigetragen wird, indem ein Auseinanderlaufen oder Verschmieren der Tinte durch Destabilisierung vermieden wird. Er kann die Haftung der nachfolgend aufgetragenen Tinte erhöhen, so dass Abblättern oder Verschmieren der Tinte vermieden wird. Er kann weiterhin die Absorption der Tinte in das Material regulieren und einem Eindringen von Pigmenten und Farbpartikeln in das Material vorbeugen. Er kann auch dazu beitragen, dass die Tinte schneller auf der Oberfläche trocknet.

Typische Fixiereinrichtungen weisen in der Regel ein oder mehrere warme Gebläse auf. Auch Wärmestrahler oder Heizelemente an den Substratführungen sind denkbar. Diese dienen dazu, um den aufgedruckten Primer und die aufgedruckte Tinte zu trocknen und somit zu fixieren. Je nach Tinte können auch UV-Strahler und andere Formen von Fixiereinrichtungen vorgesehen werden. Die Fixiereinrichtung ist der Druckeinrichtung in Druckrichtung bzw. Substratlaufrichtung nachgelagert.

Typische Lackapplikatoren bestehen aus einem Flexo-Lackwerk. Dieses ist mit einer lackbeschichteten Auftragswalze versehen, die dazu eingerichtet ist, einen Lack,, insbesondere einen Matt-, Schutz- oder Glanzlack, meistens wasserbasiert, aber nicht darauf beschränkt, auf eine Transferwalze aufzutragen und von dort auf ein Substrat mit aufgedrucktem und fixiertem Primer sowie aufgedruckter und fixierter Tinte aufzutragen. Alternativ kann auch UV-Lack denkbar sein. Die Auftragswalze wird auch Schöpfwalze oder Rasterwalze genannt, insbesondere als "anilox roller" bezeichnet. Weiterhin ist ein Gegendruckzylinder bzw. "impression roller" vorgesehen, so dass das Substrat zwischen Transferwalze und Gegendruckzylinder transportiert wird. Denkbar sind jedoch auch Lackdruckköpfe. Der Lack wird eingesetzt, um das Druckbild robust gegen Abrieb zu machen, aber auch insbesondere, um einen bestimmten Glanz zu erreichen.

Der Primer kann beim Auftragen des Lackes ähnlich mit dem Lack interagieren, wie er vorher mit der Tinte interagiert hat. Dies kann zu Problemen führen:
Ein mögliches Problem ist ein Lackausfall. Lack wird nicht mehr auf das Substrat aufgetragen, da er auf der Auftragswalze bereits beim Interagieren mit dem Primer durch Agglomeration der festen Partikel ausgehärtet wurde.

Ein weiteres mögliches Problem ist eine Glanzreduktion auf dem Substrat. Der normalerweise ohne Interaktion mit Primer erreichbare Glanzwert wird durch eine Interaktion mit dem Primer stark reduziert. Entweder wird kein Lack mehr auf das Substrat aufgetragen oder die Interaktion mit dem Primer führt zu einem schlechteren Verfließen des Llacks auf dem Substrat. Der dadurch verursachte Glanzunterschied über die Druckfläche ist auf dem bedruckten Substrat deutlich sichtbar und nicht akzeptabel.

Bei einem Flexo-Lackwerk kann auch ein nicht gleichmäßiger Abstand oder Nip der Walzen über die Druckbreite zu einem ungleichmäßigen Lackbild führen, was als Glanzunterschied sichtbar ist. Auch gerätebedingte Vibrationen können zu visuellen frequenzabbildenden Glanzunterschieden führen. Die Abnutzung der Oberfläche der Transferwalze die in der Regel Clichés, Blankets oder Sleeves aufweist, kann die Lackqualität einschränken. Die Transferwalze wird auch als "print roller" bezeichnet.

Sämtliche genannten Lackprobleme führen dazu, dass während des Druckvorgangs regelmäßige visuelle Kontrollen des bedruckten und lackierten Substrats am Ende einer Druckstraße durchgeführt werden müssen. Für die visuellen Kontrollen müssen einzelne Bögen ausgeschleust und nicht auf den Endstapel transportiert werden. Dafür können sogenannte Proof Trays erstellt werden. Die Zeit zwischen Auftreten oder Entstehen von Glanzdefekten und dem Erkennen bzw. Stopp der Produktion kann stark variieren und hängt von der Frequenz der manuellen Kontrolle ab. In dieser Zeit produzierte Druckproben müssen bei einem ungleichmäßigen Auftrag oder Schiefstand aussortiert und verworfen werden.

Die Druckschriften US 2006/0021535 A1, US 2016/0288544 A1 und US 2014/0184680 A1 offenbaren die Anwendung eines Glanzsensors beim Tintenstrahldruck. Doch lösen sie nicht das Problem breiten- oder längenaufgelöster Glanzunterschiede.

Es wird nach einer Lösung für die oben beschriebenen Probleme gesucht.

Die Aufgabe wird durch ein System zum Tintenstrahldruck nach dem unabhängigen Anspruch 1 gelöst. Weitere Ausführungsformen werden in den Unteransprüchen spezifiziert oder gehen aus der vorliegenden Beschreibung und den zugehörigen Figuren hervor.

Es wird ein System zum Tintenstrahldruck mit einer Druckeinrichtung, einer Fixiereinrichtung, einem Lackapplikator, einer Glanzsensorik und einer Reaktionseinheit vorgeschlagen.

Die Druckeinrichtung ist dazu eingerichtet, Primer und Tinte auf ein Substrat zu drucken. Insbesondere weist sie dazu Tintenstrahldruckköpfe auf, aus denen mittels elektrischer oder thermischer Impulse Primertropfen und Tintentropfen auf das Substrat ausgestoßen werden. Die Fixiereinrichtung ist dazu eingerichtet, den aufgedruckten Primer und die aufgedruckte Tinte zu fixieren. Insbesondere weist sie dazu einer Heizeinrichtung wie z.B. Gebläse oder Heizstrahler auf. Der Lackapplikator ist dazu eingerichtet, einen Lack auf das bedruckte und fixierte Substrat aufzutragen. Insbesondere weist der Lackapplikator dazu ein Flexo-Druckwerk mit einer Auftragswalze, einer Transferwalze und einem Gegendruckzylinder auf. Die Auftragswalze ist in diesem Fall dazu eingerichtet, einen Lack auf eineTransferwalze und von dort auf das Substrat nach der Fixierung aufzutragen. Die Glanzsensorik ist dazu eingerichtet, mit einer bestimmten Breitenauflösung und einer bestimmten Längenauflösung Glanzwerte des Substrats nach der Lackauftragung zu erfassen. Die Reaktionseinheit ist dazu eingerichtet, bei Eintritt einer von den Glanzwerten abhängigen Bedingung wenigstens eine Maßnahme einzuleiten.

In einer besonders vorteilhaften Ausführungsform ist die Glanzsensorik dazu eingerichtet, auf einer gesamten Breite und auf einer gesamten Länge des Substrats Glanzwerte zu erfassen. Auf diese Weise können vorteilhaft lokale Glanzunterschiede auf dem ganzen Substrat erfasst werden.

Bevorzugt ist dem Glanzapplikator noch eine Glanzfixiereinrichtung nachgelagert, die dazu eingerichtet ist, den aufgetragenen Lack zu fixieren. Dies ist vorteilhaft, da auf diese Weise ein Substrat mit einem getrockneten Lack ausgegeben werden kann.

Insbesondere ist die Glanzsensorik in Druckrichtung vor der Lackfixiereinrichtung und/oder nach der Lackfixiereinrichtung angeordnet. Eine Messung der Glanzwerte vor und nach der Lackfixiereinrichtung erlaubt vorteilhaft genauere Aussagen über den Grund von Lackunterschieden.

Besonders bevorzugt ist die Reaktionseinheit dazu eingerichtet, die gemessenen Glanzwerte mit einem Referenzglanzwert zu vergleichen und wenn als Bedingung eintritt, dass wenigstens einer der gemessenen Glanzwerte mehr als einen Schwellwert vom Referenzglanzwert abweicht, wenigstens eine Maßnahme einzuleiten.

Denkbar ist ohne Beschränkung der Allgemeinheit, dass die Glanzsensorik bissoptische Glanzsensoren und/oder Ultraschall-Glanzsensoren und/oder kapazitive Glanzsensoren und/oder digitale Bildverarbeitungssysteme aufweist. Bissoptische Glanzsensoren sind Geräte, die zur Messung des Glanzes dazu eingerichtet sind, anhand der Methode der bidirektionalen Streuverteilungsfunktion einen einfallenden und einen ausfallenden Lichtstrahl zu analysieren. Der Sensor misst die Intensität des reflektierten Lichts in verschiedenen Winkeln und berechnet dann den Glanzwert der Oberfläche basierend auf diesen Messungen. Auch andere winklige optische Glanzsensoren sind denkbar. Dies sind die gängigsten bekannten Glanzsensoren.

Besonders vorteilhaft ist, wenn die Glanzsensorik in Breitenrichtung eine bestimmte Anzahl an Glanzsensoren aufweist, die dazu eingerichtet sind, Glanzwerte breitenaufgelöst zu erfassen. Bevorzugt weist die Glanzsensorik dazu zwischen drei und dreißig Glanzsensoren in Breitenrichtung auf, noch bevorzugter fünf bis zwanzig, noch bevorzugter acht bis vierzehn. Bevorzugt sind die in Breitenrichtung angeordneten Glanzsensoren dazu eingerichtet, nacheinander mit einer bestimmten Frequenz Glanzwerte in Druckrichtung zu erfassen. Dies ist besonders vorteilhaft, da auf diese Weise mit einer guten Auflösung Glanzwerte über das gesamte Substrat erfassbar sind.

In einer besonders vorteilhaften Ausführungsform besteht wenigstens eine Maßnahme darin, ein Warnsignal auszulösen, insbesondere sichtbar an einer Bedienoberfläche oder akustisch. Die Bedienoberfläche kann insbesondere dazu ein Display oder wenigstens eine Warnlampe aufweisen. Auf diese Weise bekommt der Bediener vorteilhaft einen Hinweis darauf, dass die Lackqualität geprüft werden soll. Dadurch kann schnell in die Produktion eingegriffen werden und Ausschuss reduziert werden.

Weiterhin bevorzugt besteht wenigstens eine Maßnahme darin, eine von der Druckeinrichtung aufgedruckte Primermenge zu reduzieren, so dass vorteilhaft weniger Primer auf einer Oberfläche des Substrats zum Liegen kommt. Dies ist vor allem dann vorteilhaft, wenn wenigstens ein gemessener Glanzwert um mehr als einen Schwellwert kleiner als der Referenzglanzwert ist. Wenn weniger Primer auf das Substrat aufgedruckt wird, kann auch weniger Primer mit dem Lack interagieren, wodurch ein gemessener Glanzwert erhöht werden kann.

Insbesondere besteht wenigstens eine Maßnahme darin, eine Trocknungseinstellung in der Fixiereinrichtung anzupassen. Wenn stärker getrocknet wird, kann mehr Primer von dem Substrat absorbiert werden, wodurch weniger Primer für Interaktion mit dem Lack zur Verfügung steht. Auch dadurch kann ein gemessener Glanzwert erhöht werden.

In einer weiteren vorteilhaften Ausführungsform besteht wenigstens eine Maßnahme darin, eine Viskosität und/oder einen PH-Wert des Lackes anzupassen. Dies kann beispielsweise durch Zuführung von Lack oder Wasser erfolgen. Dadurch kann vorteilhaft ein gemessener Glanzwert erhöht oder auch reduziert werden.

Bevorzugt ist die Reaktionseinheit dazu eingerichtet, wenn als Bedingung eintritt, dass Glanzwerte gemittelt über eine Druckbreite eine Steigung oder ein Gefälle aufweisen, die oder das einen Schwellwert übersteigt, wenigstens eine Maßnahme eingeleitet wird.

Insbesondere besteht wenigstens eine Maßnahme darin, eine der drei Walzen von Auftragswalze, Transferwalze und Gegendruckzylinder automatisch zu verfahren, besonders bevorzugt auf einer Seite, die einen geringeren Glanzwert aufweist. Besonders vorteilhaft ist ein Verfahren der Transferwalze. Auf diese Weise kann eine gleichmäßigere Lackauftragung erzielt werden. Denkbar ist auch, dass ein zweites Warnsignal sichtbar an einer Bedienoberfläche ausgelöst wird.

In einer weiteren vorteilhaften Ausführungsform ist die Reaktionseinheit dazu eingerichtet, wenn als Bedingung eintritt, dass eine statistisch über die Laufzeit ermittelte Standardabweichung der Glanzwerte einen Schwellwert übersteigt, wenigstens eine Maßnahme eingeleitet wird. Auf diese Weise können vorteilhaft Vibrationen des Lackapplikators erfasst werden und es kann auf einen Verschleiß von Bauteilen geschlossen werden.

Insbesondere besteht wenigstens eine Maßnahme darin, ein drittes Warnsignal auszugeben. Auf diese Weise kann frühzeitig erkannt werden, dass Ersatzteile ausgetauscht werden müssen.

Insgesamt hat die Erfindung mit allen ihren unterschiedlichen Ausführungsformen den Vorteil, dass eine nicht ausreichende Lackqualität schneller erfasst werden kann. Durch die ermöglichte schnellere und/oder automatisierte Reaktion kann die Produktivität erhöht werden und Verwurfsmengen bzw. Ausschuss kann verringert werden.

Weitere Merkmale, bevorzugte Ausführungsformen und Vorteile ergeben sich aus der Zeichnung und der nachfolgenden Figurenbeschreibung. Es wird angemerkt, dass die Kombination der Merkmale als nicht beschränkend anzusehen ist. Die einzelnen offenbarten Merkmale sollen auch losgelöst von den konkreten Ausführungsformen in beliebiger denkbarer Kombination als ursprünglich offenbart gelten.

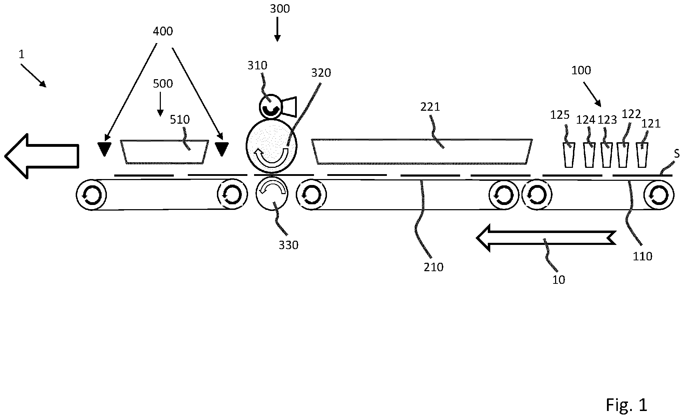

In Figur 1 ist ein System zum Tintenstrahldruck in einer schematischen Seitenansicht dargestellt und mit 1 bezeichnet.

Das System 1 weist eine Druckeinrichtung 100, eine Fixiereinrichtung 200, einen Lackapplikator 300, eine Glanzsensorik 400 sowie eine Lackfixiereinrichtung 500 auf. Eine Druckrichtung des Systems 1 ist durch einen Pfeil angegeben und mit 10 bezeichnet.

Die Druckeinrichtung 100 weist hier eine Drucksubstrattransporteinrichtung 110 auf. Die Drucksubstrattransporteinrichtung 110 besteht hier aus zwei Führungsrollen, auf denen ein Endlosband geführt wird. Die Drucksubstrattransporteinrichtung ist dazu eingerichtet, ein Substrat S unter einer Anzahl von Druckköpfen zu transportieren bzw. zu führen.

Die Druckköpfe sind hier in fünf Druckkopfmodulen angeordnet. Ein erstes Druckkopfmodul 121 ist dazu eingerichtet, Primer auf das Substrat S aufzutragen. Ein zweites Druckkopfmodul 122 ist dazu eingerichtet, schwarze Tinte auf das Substrat S aufzutragen. Ein drittes Druckkopfmodul 123 ist dazu eingerichtet, Cyan-farbige Tinte auf das Substrat aufzutragen. Ein viertes Druckkopfmodul 124 ist dazu eingerichtet, Magenta-farbige Tinte auf das Substrat aufzutragen. Ein fünftes Druckkopfmodul 125 ist dazu eingerichtet, gelbe Tinte auf das Substrat aufzutragen. Die Erfindung ist nicht auf die genannten Farben beschränkt. So ist ein Druckkopfmodul für weiße Tinte oder es sind Druckkopfmodule für weitere Farben denkbar.

Die Fixiereinrichtung 200 befindet sich in Druckrichtung 10 nach der Druckeinrichtung 100. Die Fixiereinrichtung 200 ist dazu eingerichtet, den aufgedruckten Primer und die aufgedruckte Tinte zu fixieren bzw. zu trocknen. Dazu ist hier eine Substratfixierungstransporteinrichtung 210 vorgesehen, die vergleichbar mit der Drucksubstrattransorteinrichtung 110 zwei Rollen und ein Endlosband aufweist. Weiterhin sind in dieser Ausführungsform ein oder mehrere Heizstrahler 221 vorgesehen. Denkbar sind auch ein oder mehrere Heizgebläse, was aber in der Figur nicht gezeigt ist.

In Druckrichtung 10 nach der Fixiereinrichtung ist ein Lackapplikator 300 vorgesehen. Dieser weist eine Auftragswalze 310 und eine Transferwalze auf. Weiterhin ist vorteilhaft eine Lackauftragsvorrichtung vorgesehen. Diese besteht zum Beispiel aus einem Reservoir mit einem Flüssigtank, einer Pumpe oder einem anderen Mechanismus. Das Reservoir ist mit Lack befüllbar. Die Auftraswalze 310 kann zum Beispiel mit Lack besprüht oder in den Lack getaucht werden. Die Auftragswalze 310 ist dazu eingerichtet, eine gleichmäßige Schicht Lack auf eine Transferwalze 320 aufzutragen. Beim Durchlaufen zwischen Transferwalze 320 und einem Gegendruckzylinder 330 wird der Lack auf das Substrat aufzutragen. Der Gegendruckzylinder 330 oder die Transferwalze 320 kann mit einer auf einen Dorn geschobenen Hülse versehen sein, die als sogenanntes Coating Sleeve ausgebildet sein kann. Auf dieser kann eine Druckplatte aufgeklebt sein.

In Druckrichtung 10 nach dem Lackapplikator 300 ist eine Lackfixiereinrichtung 500 angeordnet. Vor und nach der Lackfixiereinrichtung 500 ist die Glanzsensorik 400 angeordnet. Die Lackfixiereinrichtung 500 ist hier in Form von einem oder mehreren Wärmestrahlern 510 ausgebildet. Die Lacksensorik 400 ist dazu ausgebildet, in Breitenrichtung und in Längenrichtung aufgelöst Glanzwerte zu erfassen.

Die Reaktionseinhet ist in den Figuren nicht dargestellt. Sie kann beispielsweise in Form einer Steuereinheit ausgebildet sein, die zumindest mit der Glanzsensorik gekoppelt ist. Die Steuereinheit kann Signale an eine Bedieneinheit mit Warnleuchten senden oder an den Lackapplikator oder auch an die Druckeinheit, um wenigstens eine gewünschte Reaktion auszulösen.

Ausführungsformen können als Hardware (z.B. Schaltkreise), Firmware, Software oder irgendeine Kombination davon ausgebildet sein. Ausführungsformen können auch als Anweisungen implementiert sein, die auf einem maschinenlesbaren Medium implementiert sind, das von einem oder mehreren Prozessoren gelesen und ausgeführt werden kann. Ein maschinenlesbares Medium kann jeden Mechanismus zum Speichern oder Übertragen von Informationen in einer Form umfassen, die von einer Maschine (z.B. einem Computer) lesbar ist. Für die Zwecke dieser Diskussion sollen die Begriffe "Steuereinheit", "Steuergerät" oder "Steuervorrichtung" als Schaltkreise oder Prozessoren oder eine Kombination davon verstanden werden, einschließlich Speicher, die Anweisungen speichern. Ein Schaltkreis umfasst einen analogen Schaltkreis, einen digitalen Schaltkreis, einen Datenverarbeitungsschaltkreis , andere strukturelle elektronische Hardware oder eine Kombination davon. Ein Prozessor umfasst einen Mikroprozessor, einen digitalen Signalprozessor (DSP), einen zentralen Prozessor (CPU), einen anwendungsspezifischen durch Instruktionen eingestellten Prozessor 8ASIP); einen Graphik- und/oder Bildprozessor, einen Mehrkernprozessor oder einen anderen Hardwareprozessor.

### BEZUGSZEICHENLISTE

- 1: System zum Tintenstrahldruck
- 10: Druckrichtung
- 100: Druckeinrichtung
- 110: Drucktransporteinrichtung
- 121: erstes Druckkopfmodul
- 122: zweites Druckkopfmodul
- 123: drittes Druckkopfmodul
- 124: viertes Druckkopfmodul
- 125: fünftes Druckkopfmodul
- 210: Fixiertransporteinrichtung
- 221: Heizstrahler
- 300: Lackapplikator
- 310: Auftragswalze
- 320: Transferwalze
- 330: Gegendruckzylinder
- 400: Lacksensorik
- 500: Lackfixiereinrichtung
- 510: Wärmestrahler
- S: Substrat

## Patentansprüche

1. System (1) zum Tintenstrahldruck mit einer Druckeinrichtung (100), einer Fixiereinrichtung (200), einem Lackapplikator (300), einer Glanzsensorik (400) und einer Reaktionseinheit, wobei die Druckeinrichtung (100) dazu eingerichtet ist, Primer und Tinte auf ein Substrat (S) zu drucken, wobei die Fixiereinrichtung (200) dazu eingerichtet ist, den aufgedruckten Primer und die aufgedruckte Tinte am Substrat (S) zu fixieren, wobei der Lackapplikator (300) dazu eingerichtet ist, einen Lack auf das bedruckte und fixierte Substrat aufzutragen, wobei die Glanzsensorik (400) dazu eingerichtet ist, mit einer bestimmten Breitenauflösung und einer bestimmten Längenauflösung Glanzwerte des Substrats nach der Lackauftragung zu erfassen, wobei die Reaktionseinheit dazu eingerichtet ist, bei Eintritt einer von den Glanzwerten abhängigen Bedingung eine Maßnahme einzuleiten.

2. System (1) nach Anspruch 1, wobei die Glanzsensorik (400) dazu eingerichtet ist, auf einer gesamten Breite und auf einer gesamten Länge des Substrats (S) Glanzwerte zu erfassen.

3. System (1) nach Anspruch 1 oder 2, wobei dem Glanzapplikator (300) in einer Druckrichtung (10) eine Lackfixiereinrichtung nachgelagert ist.

4. System (1) nach Anspruch 3, wobei die Glanzsensorik (400) in Druckrichtung (10) vor und/oder nach der Lackfixiereinrichtung angeordnet ist.

5. System (1) nach einem der vorstehenden Ansprüche, wobei die Reaktionseinheit dazu eingerichtet ist, die gemessenen Glanzwerte mit einem Referenzglanzwert zu vergleichen und wenn als Bedingung eintritt, dass wenigstens einer der gemessenen Glanzwerte mehr als einen Schwellwert von dem Referenzglanzwert abweicht, wenigstens eine Maßnahme einzuleiten.

6. System (1) nach einem der vorstehenden Ansprüche, wobei die Glanzsensorik (400) bissoptische Glanzsensoren und/oder Ultraschall-Glanzsensoren und/oder kapazitive Glanzsensoren und/oder digitale Bildverarbeitungssystems und/oder winklige optische Glanzsensoren aufweist.

7. System (1) nach einem der vorstehenden Ansprüche, wobei die Glanzsensorik (4) in Breitenrichtung zwischen fünf und fünfunddreißig Glanzsensoren aufweist, die insbesondere dazu eingerichtet sind, nacheinander mit einer bestimmten Frequenz Glanzwerte in einer Druckrichtung (10) zu erfassen.

8. System (1) nach einem der vorstehenden Ansprüche, wobei die Maßnahme darin besteht, ein Warnsignal auszulösen, insbesondere an einer Bedienoberfläche, und/oder eine von der Druckeinrichtung (100) aufgedruckte Primermenge zu reduzieren und/oder eine Viskosität und/oder einen ph-Wert des Lackes anzupassen.

9. System (1) nach einem der vorstehenden Ansprüche, wobei, wenn als Bedingung eintritt, dass Glanzwerte gemittelt über eine Druckbreite eine Steigung oder ein Gefälle aufweisen, die oder das einen Schwellwert übersteigt, die Reaktionseinheit dazu eingerichtet ist, wenigstens eine Maßnahme einzuleiten, wobei insbesondere die Maßnahme, wenigstens eine Walze von einer Auftragswalze (310), einer Transferwalze (320) und einem Gegendruckzylinder (330) des Lackapplikators (300) automatisch zu verfahren, besonders bevorzugt auf einer Seite, die einen geringeren Glanzwert aufweist.

10. System (1) nach einem der vorstehenden Ansprüche, wobei, wenn als die Bedingung eintritt, dass eine statistisch über eine Laufzeit ermittelte Standardabweichung der Glanzwerte einen Schwellwert übersteigt, die Reaktionseinheit dazu eingerichtet ist, eine Maßnahme einzuleiten.
